# EUROPÄISCHE PATENTSCHRIFT

(11) **EP 1 805 741 B1**
(45) Veröffentlichungstag und Bekanntmachung des Hinweises auf die Patenterteilung: **25.04.2012**
(21) Anmeldenummer: 05801380.6
(22) Anmeldetag: 26.10.2005
(51) Int. Cl.: G08G 1/0967, B60T 7/12, B60K 31/00

(54) **VERFAHREN ZUR DRAHTLOSEN ÜBERMITTLUNG VON VERKEHRSINFORMATIONEN**
WIRELESS TRAFFIC INFORMATION TRANSMISSION PROCESS
PROCEDE DE TRANSMISSION SANS FIL D'INFORMATIONS ROUTIERES

(30) Priorität: 29.10.2004 DE 102004052958; 26.10.2005 DE 102005051520
(43) Veröffentlichungstag der Anmeldung: 11.07.2007
(73) Patentinhaber: Continental Teves AG & Co. oHG, 60488 Frankfurt am Main (DE)
(72) Erfinder: FENNEL, Helmut, 65812 Bad Soden (DE); GIERS, Bernhard, 65812 Bad Soden (DE); STÖLZL, Stephan, 69469 Weinheim (DE)
(86) Internationale Anmeldenummer: PCT/EP2005/055584
(87) Internationale Veröffentlichungsnummer: WO 2006/045825

(56) Entgegenhaltungen:
- FR-A- 2 827 065
- GB-A- 2 381 927
- US-B1- 6 516 273

## Beschreibung

Die Erfindung betrifft ein Verfahren zur drahtlosen Übermittlung von Verkehrsinformationen, bei dem zwischen einem Verkehrshinweisgeber und einem Empfänger Informationen zumindest über die Art des Verkehrshinweises ausgetauscht werden.

Es ist bereits aus der DE 197 41 033 A1 bekannt, in einem Kraftfahrzeug eine Verkehrsinformation zur Warnung eines Fahrzeugführers bei Überschreitung einer vorgegebenen Geschwindigkeit zu nutzen. Dabei wird allerdings lediglich eine akustische oder optische Meldung für den Fahrer erzeugt.

Aus der DE 44 11 125 C2 ist bereits die Nutzung von drahtlosen Verkehrsschildinformationen mittels in Verkehrsschildern integrierten Transpondern bekannt, welche zur Beeinflussung der Fahrgeschwindigkeit von Kraftfahrzeugen, insbesondere Lastkraftwagen genutzt werden können. Ein ganz ähnliches System wird in der DE 102 48 968 A1 beschrieben. Auch hier werden mit Transpondern ausgestattete Verkehrschilder zur Übertragung von Verkehrsinformationen an Kraftfahrzeuge genutzt. Eine Nutzung der Verkehrsinformation über die Begrenzung oder Beeinflussung der Fahrgeschwindigkeit (z.B. über Tempomat) bzw. der Anzeige dieser Information hinaus geht jedoch aus keiner der vorstehend genannten Schriften hervor.

Die FR 2 827 065 offenbart eine Vorrichtung zur Unterstützung von Fahrzeugführern im Straßenverkehr und zur Erhöhung der Sicherheit von Fahrzeuginsassen. Dazu ist das Fahrzeug mit einer Empfangsvorrichtung versehen, welche drahtlos Informationen von Verkehrshinweisgebern empfängt. Die empfangenen Informationen können dabei für einen autonomen Bremsvorgang genutzt werden.

Die Erfindung setzt sich zum Ziel, unter Nutzung der Transpondertechnik darüber hinaus die aktive Fahrsicherheit zu erhöhen.

Diese Aufgabe wird erfindungsgemäß gelöst durch das Verfahren gemäß Anspruch 1.

Es hat sich gezeigt, dass zur Vermeidung von Unfällen bzw. zur Senkung der Schwere eines Unfalls die Reaktionszeit bis zum Unfall von großem Einfluss ist. Hier setzt die Erfindung an, in dem sehr schnell, ohne Mitwirkung des Fahrers, Maßnahmen getroffen werden, die zu einer Verminderung der Unfallgefahr oder Unfallschwere führen können. Auf diese Weise lässt sich unter anderem der Bremsweg verkürzen.

Weitere bevorzugte Ausführungsformen ergeben sich aus den Unteransprüchen und der nachfolgenden Beschreibung der Figuren.

Nachfolgend wird die Erfindung an Hand von Beispielen näher erläutert.

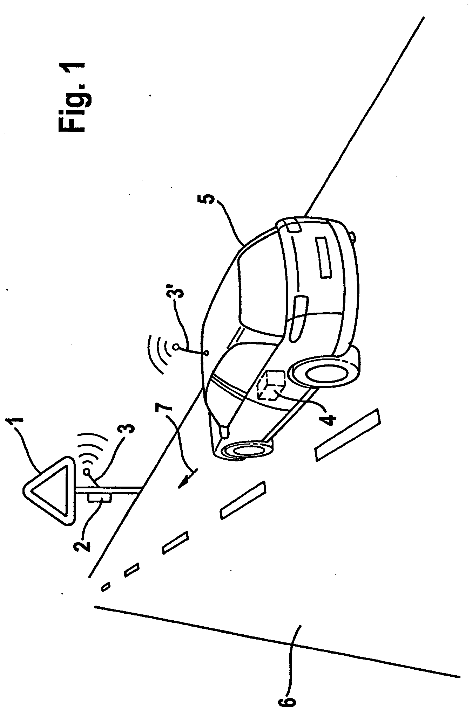

Es zeigt
- Fig. 1: eine schematische Darstellung eines Personenkraftfahrzeugs im Straßenverkehr.

Fahrzeug 5 bewegt sich auf Strasse 6 in Richtung des Pfeils 7 auf Verkehrshinweisgeber 1 zu. Verkehrhinweisgeber 1 ist mit einem an sich bekannten Transponder 2 versehen. Über Antenne 3' kann ein innerhalb des Fahrzeugs 5 angeordnetes Steuergerät 4 mit Transponder 2 (über Antenne 3) codierte Daten drahtlos austauschen. Transponder 2 enthält keine eigene elektrische Energiequelle. Die Energie zur Speisung der Elektronik des Transponders, welcher einen Sender und eine digitale Codierungseinrichtung umfasst, wird von Fahrzeug 5 auf einer anderen Frequenz an den Transponder übertragen. Es ist auch möglich, dass an Stelle des Transponders 2 im Bereich des Verkehrshinweisgebers 1 eine Elektronik verwendet wird, welche eine eigene Energiequelle besitzt, und mittels eines nicht energieübertragenden Abfragesignals auf bekannte Weise von Steuergerät 4 per Funk oder optisch abgefragt wird.

Über die drahtlose Verbindung zwischen Verkehrshinweisgeber 1 und Steuergerät 4 kann in das Steuergerät eingelesen werden, welcher Art das durch den Verkehrshinweisgeber repräsentierte Verkehrsschild ist oder welche Hinweisfunktion der Verkehrshinweisgeber hat. Dieser kann nämlich auch unsichtbar etwa im Bereich einer Brücke in die Fahrbahn eingelassen sein. Auf diese Weise lässt sich die durch den Verkehrshinweisgeber zu übermittelnde Verkehrsinformation an Steuergerät 4 übertragen. Das Steuergerät ist dann in der Lage, das Fahrzeug oder den Fahrer auf die bevorstehende Verkehrssituation, insbesondere bei drohenden Gefahren, durch Warnung und/oder Eingriff in die Fahrzeugfunktion vorzubereiten.

Situationen, bei denen ein Eingriff oder eine Warnung erfolgt, sind beispielsweise erhöhte Geschwindigkeit gegenüber der gerade am Ort des Fahrzeugs und zu dem aktuellen Zeitpunkt zulässigen Geschwindigkeit, Annähern an eine Kreuzung, bei der die aktuelle Fahrtrichtung keinen Vorrang hat, sonstige verkehrswidrige Fahrmanöver (Fahren in Einbahnstrasse oder Strassen, in die eine Einfahrt verboten ist), auf Grund von Wettereinflüssen gefährdete Streckenabschnitte (vereiste Brücken, Sturmwarnung etc.) oder das schnelle Zufahren auf enge Kurven.

Dabei ist es bevorzugt, dass das Steuergerät die Verkehrsinformation mit sensorisch durch das Fahrzeug gewonnenen Informationen über den aktuellen Fahrzustand vergleicht und daraus weitere Informationen über die Notwendigkeit eines Eingriffs oder einer Warnung gewinnt. Geeignete sensorisch gewonnene Informationen sind zum Beispiel Fahrgeschwindigkeit, Außentemperatur sowie Abstandsignale hinsichtlich anderer Fahrzeuge oder Hindernisse.

Die Fahrerwarnung kann bevorzugt durch optische, akustische oder haptische Signale erfolgen, im Falle einer optischen Warnung bietet sich beispielsweise die Anzeige mittels einer Lampe oder einem Display an.

Es ist dabei weiterhin bevorzugt, dass die Verkehrsinformation mit Informationen eines Navigationssystem in sinnvoller Weise verknüpft wird. Im Falle der Nutzung eines Navigationssystems ist es besonders zweckmäßig, dass dieses regelmä-βig mit aktuellen Daten versorgt werden kann, zum Beispiel durch manuellen oder automatischen Update. Besonders vorteilhaft sind Navigationssysteme nutzbar, welche kartographische Daten verwenden.

Ein Eingriff kann bevorzugt auch darin bestehen, dass die vorhandene elektronische Bremsanlage auf eine bevorstehende Bremsung vorbereitet wird, zum Beispiel in dem eine Hydraulikpumpe aktiviert wird, welche eine Vorbefüllung der zu den Radbremszylindern führenden Bremsleitungen vornimmt. In diesem Fall braucht das Bremspedal durch den Fahrer nicht mehr mit dem sonst notwendigen Pedalweg gedrückt werden. Es reicht vielmehr bereits ein weniger tiefes Drücken des Bremspedals aus, wodurch sich in den meisten Fällen eine nicht unwesentliche Verkürzung des Bremsweges erzielen lässt.

Eine weitere bevorzugte Möglichkeit des Eingriffs besteht darin, bei Gefahr die Ansprechschwellen eines Bremsassistenten so einzustellen, dass sich ein stärkeres Ansprechverhalten des Bremssystems ergibt.

Eine weitere bevorzugte Möglichkeit des Eingriffs besteht darin, dass bei Gefahr durch das Bremssystem eine vom Fahrer unabhängige aktive Bremsung des Fahrzeugs hervorgerufen wird; z.B. ein ACC-Bremsvorgang, welcher insbesondere mit einer Fahrzeug-Verzögerung in Höhe von etwa 0,3 g durchgeführt wird.

Eine weitere bevorzugte Möglichkeit des Eingriffs besteht darin, dass die Parameter eines elektronisch verstellbaren Fahrwerks oder die Regelparameter eines aktiv geregelten Fahrwerks an die auf vorstehend beschriebene Weise erkannte Gefahrensituation angepasst werden.

Eine weitere bevorzugte Möglichkeit des Eingriffs besteht darin, bei einem Force-Feedback-Pedal, insbesondere in Zusammenhang mit einem Fahrpedal, das Pedal bei Gefahr härter einzustellen, so dass der Fahrer gewarnt ist. Ein besonders zweckmäßig zu beeinflussendes Fahrpedal stellt das Gaspedal dar, da ein Fahrer in der Regel den Fuß auf diesem Pedal hat und bei Beeinflussung der Gaspedalcharakteristik dementsprechend früh gewarnt wird.

## Patentansprüche

1. Verfahren zur drahtlosen Übermittlung von Verkehrsinformationen, bei dem zwischen einem Verkehrshinweisgeber und einem Empfänger Informationen zumindest über die Art des Verkehrshinweises ausgetauscht werden, wobei der Empfänger ein mit einem elektronischen Bremssystem und/oder Fahrdynamikregelungssystem ausgestattetes Kraftfahrzeug ist, die Verkehrsinformation genutzt wird, um zumindest eine obligatorische Maßnahme
- Vorbereiten des Bremssystems oder der Fahrdynamikregelung für ein schnelleres Ansprechen der Bremsvorrichtung, sowie eine oder mehrere fakultative Maßnahmen aus der Gruppe
- selbstständiger Bremseneingriff zum Verzögern des Fahrzeugs ohne Fahrerbremsung oder
- Vorbereiten des Fahrwerks oder sonstiger Fahrzeugkomponenten auf eine bevorstehende Bremsung durchzuführen,
wobei
das Vorbereiten des Bremssystems oder der Fahrdynamikregelung für ein schnelleres Ansprechen der Bremsvorrichtung darin besteht, dass der Leerweg der Bremseinrichtung reduziert wird, insbesondere indem bei einer hydraulischen Bremsanlage ein Vorbefüllen der Radbremszylinder durchgeführt wird.

2. Verfahren nach Anspruch 1,
**dadurch gekennzeichnet,**
**dass** die Vorbereitungsmaßnahmen in einem Blockierverhinderungssystem (ABS) und/oder einer Einrichtung zur Fahrdynamikregelung (ESP) und/oder in einer Abstandsregelungseinrichtung (ACC) vorgenommen werden.

3. Verfahren nach mindestens einem der vorhergehenden Ansprüche, **dadurch gekennzeichnet,**
**dass** zusätzlich zu dem Bremseneingriff oder der/den vorbereitenden Maßnahme/-n eine Warnung des Fahrzeugführers durch eines oder mehrere Anzeigeelemente im Bereich des Fahrzeugführers und/oder durch Änderung der Ansprechcharakteristik eines Fahrpedals (Pedalgefühl) herbeigeführt wird.

4. Verfahren nach mindestens einem der vorhergehenden Ansprüche, **dadurch gekennzeichnet,**
**dass** die Maßnahme (n) bei Erkennung eines Verstoßes gegen eine Verkehrsregel oder von einer Gefahrensituation eingeleitet wird/werden.

5. Verfahren nach mindestens einem der vorhergehenden Ansprüche, **dadurch gekennzeichnet,**
**dass** ein aktiver Bremseneingriff, insbesondere mit einer vorgegebenen Verzögerung, vorgenommen wird und/oder die Ansprechschwellen eines Bremsassistenten an eine erhöhte Bremsbereitschaft angepasst werden.

6. Verfahren nach mindestens einem der vorhergehenden Ansprüche, **dadurch gekennzeichnet**
**dass** der Verkehrshinweisgeber a) einen auf Anforderung sendenden Transponder oder b) eine energiegespeiste Sende/- Empfangsanordnung, welche auf Anforderung sendet, oder c) einen permanent oder zeitweise aktiven Sender, umfasst, welcher bzw. welche zum Senden des Verkehrshinweises geeignet ist.

7. Verfahren nach mindestens einem der vorhergehenden Ansprüche, **dadurch gekennzeichnet,**
**dass** zusätzlich die Informationen eines Navigationssystems zur Beurteilung der aktuellen Gefahrensituation benutzt werden.

8. Verfahren nach mindestens einem der vorhergehenden Ansprüche, **dadurch gekennzeichnet,**
**dass** die Verkehrsinformationen mit Informationen des Navigationssystems verknüpft werden, in dem die Koordinaten der Verkehrshinweisgeber in Form von Daten abgelegt sind und/oder mit den Gefahrenstellen, wie zum Beispiel enge Kurven, Brücken etc., aus dem kartographischen Datenmaterial ableitbar sind.

## Claims

1. Wireless traffic information transmission method in which information at least about the type of the traffic message is exchanged between a traffic message signal generator and a receiver, wherein the receiver is a motor vehicle which is equipped with an electronic brake system and/or vehicle dynamics control system and the traffic information is used for at least one compulsory measure
- preparation of the brake system or of the vehicle dynamics controller for more rapid response of the brake device,
as well as one or more optional measures from the group of
- executing an automatic braking intervention for decelerating the vehicle without braking by the driver or
- preparing the chassis or other vehicle components for an imminent braking operation,
wherein the preparation of the brake system or of the vehicle dynamics controller for more rapid response of the brake device comprises reducing the idle travel of the brake device, in particular by pre-charging the wheel brake cylinders in a hydraulic brake system.

2. Method according to Claim 1,
**characterized in that**
the preparatory measures are performed in an anti-lock brake system (ABS) and/or a vehicle dynamics control device (ESP) and/or an adaptive cruise controller (ACC).

3. Method according to at least one of the preceding claims, **characterized in that**
in addition to the braking intervention or the preparatory measure or measures, the vehicle driver is warned by one or more display elements in the region of the vehicle driver and/or by changing the response characteristic of an accelerator pedal (pedal sensation).

4. Method according to at least one of the preceding claims, **characterized in that**
the measure(s) is/are initiated when an infringement of a traffic regulation or a hazardous situation is detected.

5. Method according to at least one of the preceding claims, **characterized in that**
an active braking intervention is performed, in particular, with a predefined deceleration, and/or the response thresholds of a braking assistant are adapted to improve readiness for braking.

6. Method according to at least one of the preceding claims, **characterized in that**
the traffic message signal generator comprises a) a transponder which transmits on request or b) a transceiver arrangement which is fed with energy and which transmits on request, or c) a permanently or temporarily active transmitter, which transponder, transceiver arrangement or transmitter is suitable for transmitting the traffic message.

7. Method according to at least one of the preceding claims, **characterized in that**
in addition, the information of a navigation system is used to assess the current hazardous situation.

8. Method according to at least one of the preceding claims, **characterized in that**
the traffic information is logically combined with information of the navigation system in which the coordinates of the traffic message signal generator are stored in the form of data and/or with the hazardous locations, such as for example tight bends, bridges etc., can be derived from the cartographic data material.

## Revendications

1. Procédé pour la transmission sans fil d'informations de circulation, dans lequel des informations concernant au moins le type d'avis de circulation sont échangées entre un fournisseur d'avis de circulation et un récepteur, le récepteur étant un véhicule automobile équipé d'un système électronique de freinage et/ou d'un système de régulation dynamique du comportement et les informations de circulation étant utilisées afin de prendre au moins une mesure obligatoire pour effectuer
- la préparation du système de freinage ou la régulation dynamique de comportement afin d'obtenir une réponse plus rapide du dispositif de freinage, ainsi qu'une ou plusieurs mesures facultatives choisies dans le groupe comprenant :
- l'application autonome des freins afin de provoquer une décélération du véhicule sans freinage provoqué par le conducteur, ou
- la préparation de la suspension ou d'autres composants du véhicule à un freinage imminent,
dans lequel
la préparation du système de freinage ou du système de régulation dynamique du comportement pour une réponse plus rapide du dispositif de freinage consiste en ce que la course morte du dispositif de freinage est réduite, en effectuant un pré-remplissage des cylindres de freins de roue, notamment dans le cas d'un système de freinage hydraulique.

2. Procédé selon la revendication 1, **caractérisé en ce que** les mesures de préparation sont mises en oeuvre dans un système antiblocage (ABS) et/ou dans un dispositif destiné à la régulation dynamique du comportement (ESP) et/ou dans un dispositif régulateur de vitesse (ACC).

3. Procédé selon l'une quelconque des revendications précédentes, **caractérisé en ce que**, en plus de l'application des freins et/ou de la ou des mesures de préparation, un avertissement du conducteur est provoqué par un ou plusieurs éléments d'affichage dans la région où se trouve le conducteur du véhicule et/ou par modification de la caractéristique de réponse d'une pédale d'accélérateur (sensation de pédale).

4. Procédé selon au moins l'une des revendications précédentes, **caractérisé en ce que** la/les mesure(s) est/sont mises en oeuvre lors de la détection de la violation d'une règle de la circulation ou en cas d'urgence.

5. Procédé selon au moins l'une des revendications précédentes, **caractérisé en ce qu'**une application active des freins est effectuée, notamment avec un retard prédéterminé, et/ou **en ce que** les seuils de réponse d'une assistance au freinage sont adaptés à un niveau de préparation au freinage plus élevé.

6. Procédé selon au moins l'une des revendications précédentes, **caractérisé en ce que** le fournisseur d'avis de circulation comprend a) un transpondeur émettant à la demande ou b) un moyen d'émission/réception alimenté en énergie et émettant à la demande, ou c) un émetteur actif en permanence ou temporairement, qui convient ou conviennent pour l'émission de l'avis de circulation.

7. Procédé selon au moins l'une des revendications précédentes, **caractérisé en ce qu'**on utilise en outre les informations d'un système de navigation pour évaluer la situation de risque instantanée.

8. Procédé selon au moins l'une des revendications précédentes, **caractérisé en ce que** les informations de circulation sont combinées à des informations du système de navigation en stockant les coordonnées du fournisseur d'avis de circulation sous la forme de données et/ou avec des lieux dangereux, comme par exemple des virages serrés, des ponts, etc., qui peuvent être déduites de données cartographiques.
